# EUROPEAN PATENT SPECIFICATION

(11) **EP 2 017 852 B1**
(45) Date of publication and mention of the grant of the patent: **15.06.2011**
(21) Application number: 08160753.3
(22) Date of filing: 18.07.2008
(51) Int. Cl.: G21C 3/07, C23C 4/08

(54) **Nuclear fuel rod with wear-inhibiting coating**
Kernbrennstab mit verschleißgeschützter Beschichtung
Barre de combustible nucléaire avec revêtement anti-usure

(30) Priority: 20.07.2007 US 780537
(43) Date of publication of application: 21.01.2009
(73) Proprietor: GENERAL ELECTRIC COMPANY, Schenectady, NY 12345 (US)
(72) Inventor: Gray, Dennis Michael, Delanson, NC 12053 (US); White, David William, Wilmington, NC 28409 (US); Andresen, Peter Louis, Schenectady, NY 12308 (US); Kim, Young Jin, Clilfton Park, NY 12065 (US); Lin, Yang-Pi, Wilmington, NC 28405 (US); Curtis, Todd Charles, Schenectady, NY 12303 (US); Patterson, Charles Beaty, Wilmington, NC 28401 (US)
(74) Representative: Szary, Anne Catherine

(56) References cited:
- EP-A- 1 361 291
- WO-A-97/02576
- WO-A-97/31376
- GB-A- 1 295 787
- GB-A- 2 063 305
- US-A- 5 227 129
- US-A- 5 274 686

## Description

### BACKGROUND

The invention relates generally to fuel elements for nuclear reactors, and more particularly to braces, spacers, or support lattices which are usually placed at predetermined distance(s) along the length of the fuel elements in order to provide lateral bracing and spacing, and to maintain the fuel elements in fixed positions.

Boiling water nuclear reactors operate for many years. Commencing with their initial construction and through their service lives, these reactors may accumulate debris in their closed circulation moderator systems. This debris can become an operating hazard if the debris is allowed to enter into the fuel bundle containing core region having the heat generating fuel rods. In order to understand this problem, a summary of reactor construction as it relates to the accumulation of debris in the core needs first to be given. Thereafter, fuel bundle construction will be set forth. Emphasis will be given to the need to preserve substantially unchanged the regions of pressure drop within the fuel bundles. Thereafter, the effects caused by debris entering into the fuel rod region of the fuel bundles will be summarized.

Boiling water nuclear reactor construction can be simply summarized for purposes of understanding the debris entrainment problem. Such nuclear reactors are provided with a large, central core. Liquid water coolant/moderator flow enters the core from the bottom and exits the core as a water steam mixture from the top.

The core includes many side-by-side fuel bundles. Water is introduced into each fuel bundle through a fuel bundle support casting from a high pressure plenum which is situated below the core. Water passes in a distributed flow through the individual fuel bundles, is heated to generate steam, and exits the upper portion of the core as a two phase water steam mixture from which the steam is extracted for the generation of energy.

The core support castings and fuel bundles are a source of pressure loss in the circulation of water through the core. This pressure loss assures the substantially even distribution of flow across the individual fuel bundles of the reactor core. When it is remembered that there are as many as 750 individual fuel bundles in a reactor core, it can be appreciated that assurance of the uniformity of flow distribution is important. To interfere with the pressure drop within the fuel bundles could affect the overall distribution of coolant/moderator within the fuel bundles of the reactor core.

Having set forth the construction of the boiling water nuclear reactor in so far as is appropriate; attention can now be directed to the construction of the fuel bundles themselves.

The fuel bundles for a boiling water nuclear reactor include a fuel rod supporting lower tie plate assembly, in which the lower tie plate is a cast structure. The lower tie plate assembly includes at its lowest point a downward protruding bail covering an inlet nozzle. This inlet nozzle includes entry to an enlarged flow volume within the lower tie plate. At the upper end of the flow volume, there is located a rod supporting grid. Between the supporting grid and the nozzle there is defined a flow volume.

The rod supporting grid has two purposes. First, the rod supporting grid provides the mechanical support connection for the weight of the individual fuel rods to be transmitted through the entire lower tie plate to the fuel support casting. Secondly, the rod supporting grid provides a flow path for liquid water moderator into the fuel bundle for passage in between the side-by-side supported fuel rods.

Above the lower tie plate, each fuel bundle includes a matrix of upstanding fuel rods, which are sealed tubes each containing fissionable material which when undergoing nuclear reaction produce the power generating steam. At the upper end of the matrix of upstanding fuel rods is located a so-called upper tie plate. This upper tie plate holds at least some of the fuel rods in vertical side-by-side alignment. Some of the fuel rods are attached to both the upper and lower tie plates. Between the upper and lower tie plates, there are usually included water rods or equivalent devices for improvement of the water moderator to fuel ratio, particularly in the upper, highest void fraction region of the fuel bundle.

Fuel bundles also include about seven fuel rod spacers at varying elevations along the length of the fuel bundle. These spacers are required because the fuel rods are long (about 4.06 m (160 inches)) and slender (about 10.16 to 12.7 mm (0.4 to 0.5 inches) in diameter), and would come into contact under the dynamics of fluid flow and nuclear power generation within the fuel bundles. The spacers provide appropriate restraints for each fuel rod at their respective elevations and thus prevent abrading contact between the fuel rods and maintain the fuel rods at uniform spacing relative to one another along the length of the fuel bundle for optimum performance. As will hereafter be developed, these spacers are sites where debris can be trapped and damage the fuel rods.

Each fuel bundle is surrounded by a channel. This channel causes water flowing between the tie plates to be restricted to only one bundle in an isolated flow path between the tie plates. The channel also serves to separate the steam generating flow path through the fuel bundles from the surrounding core bypass region, this region being utilized for the penetration of the control rods. The water in the bypass region also provides neutron moderation.

In the operation of a boiling water nuclear reactor, it is important to understand that the maintenance of the originally designed flow distribution is important. Specifically, from the lower (high pressure) plenum inlet to the core to the outlet from the core of the steam and water mixture through the upper tie plates of the fuel bundles, about 138 KPa (20 pounds per square inch (psi)) of pressure drop is encountered at typical 100% power/100% flow operating conditions. About 48 to 55 KPa (7 to 8 psi) of this pressure drop occurs through the fuel support casting. This pressure drop is mainly to assure the uniform distribution of coolant/moderator flow through the many fuel bundles making up the core of the reactor and is related to the prevention of operating instabilities within the reactor at certain power rates of the reactor. At the lower tie plate of each fuel bundle, from the inlet nozzle into the flow volume and through the fuel rod supporting grid, about 6.89 to 10.34 KPa (1 to about 1 1/2 psi) pressure drop occurs which contributes to establishing flow distribution between the individual fuel rods of each fuel bundle. Finally, through the fuel bundle itself--from the lower supporting grid to the exit at the upper tie plate about 75.8 KPa (11 psi) of pressure drop usually occurs.

Having summarized the construction and operation of a boiling water nuclear reactor, the problem of debris resident within the closed circulation moderator system of the reactor can now be understood. Typically debris within boiling water nuclear reactors can include extraneous materials left over from reactor construction. Further, corrosion during the reactor lifetime also liberates debris. Finally, further debris can be introduced during the numerous outages and repairs of the nuclear reactor. It will therefore be understood that nuclear reactors constitute closed circulation systems that essentially accumulate debris with increasing age.

It has been discovered that a particularly vexing and usual place for the accumulation of debris is in the fuel bundles between the fuel rods particularly in the vicinity of the fuel rod spacers. It will be remembered that each fuel rod is surrounded by the spacer at the particular elevation of the spacer. Debris particles tend to lodge between the spacer structure and the fuel rods and often dynamically vibrate with the coolant/moderator flow in abrading contact to the sealed cladding of the fuel rods. Such flow induced vibration within the reactor, can cause fretting and eventually damage and/or rupture of the cladding of the fuel rods. The rupture of the cladding may lead to the undesirable release of fission gas accumulated and sealed within the fuel rod prior to the rupture. If sufficient fission gas has been released due to cladding ruptures, plant shutdown could be necessary.

It is to be understood that modem nuclear plants have both redundancy and many safety systems designed to counter act anticipated operating casualties, such as fuel rods becoming punctured by debris. Such failures are not of safety concern. However, in almost all cases they result in the plant operating at less than optimum efficiency. Thus, it is highly desirable to reduce the incidence of debris damage to fuel rods.

### BRIEF DESCRIPTION

Briefly, one aspect of the invention resides in a fuel rod comprising a cladding tube and a hard metallic material bonded to an outer surface of the cladding tube, wherein the hard metallic material is selected from the group consisting of NiCrAlY, NiCr, FeCrAIY, FeCr, or combinations thereof.

Another aspect of the invention resides in a fuel rod comprising a cladding tube and a composite of a metal matrix and a ceramic material or a metal oxide hard phase material, wherein the metal matrix acts as a binding agent for bonding the ceramic material or the metal oxide hard phase material to the cladding tube.

In another aspect of the invention, a method for enhancing the fretting wear characteristics of a fuel rod comprises the step of thermal spraying a hard metallic powder material selected from the group consisting of NiCrAlY, NiCr, FeCrAlY, FeCr, or combinations thereof, onto an outside surface of a cladding tube to form a wear-inhibiting coating having a thickness of between about 25 µm (microns) and about 175 µm (microns).

In yet another aspect of the invention a method for enhancing the fretting wear characteristics of a fuel rod, comprising the steps of:
thermal spraying a metallic powder material onto an outside surface of a cladding tube to form a metal matrix; and
thermal spraying a cermet powder material simultaneously with the metallic material onto the outside surface of the cladding tube, whereby the metal matrix formed by the metallic material acts as a binding agent for bonding the cermet material onto the outside surface of the cladding tube to form a wear-inhibiting coating.

### DRAWINGS

These and other features, aspects, and advantages of the present invention will become better understood when the following detailed description is read with reference to the accompanying drawings by way of example in which like characters represent like parts throughout the drawings, wherein:
FIG. 1 is a perspective view, partly in schematic, illustrating a fuel assembly including fuel rods having a wear-inhibiting coating in accordance with the invention;
FIG. 2 is an enlarged view of the fuel rod and spacer grid of FIG. 1;
FIG. 3 is an enlarged cross-sectional view, partly in schematic, of a fuel rod taken along the line 3-3 of FIG. 2; and
FIG. 4 is a black and white photomicrograph of the wear-inhibiting coating comprising NiCrAlY that was applied to the exterior surface of a new Zircaloy cladding tube using the HVOF process in accordance with the invention.
FIG. 5 is a black and white photomicrograph of the wear-inhibiting coating comprising NiCrAlY and TiO₂ that was applied to the exterior surface of a new Zircaloy cladding tube using the HVOF and air plasma thermal spray processes, respectively, in accordance with the invention

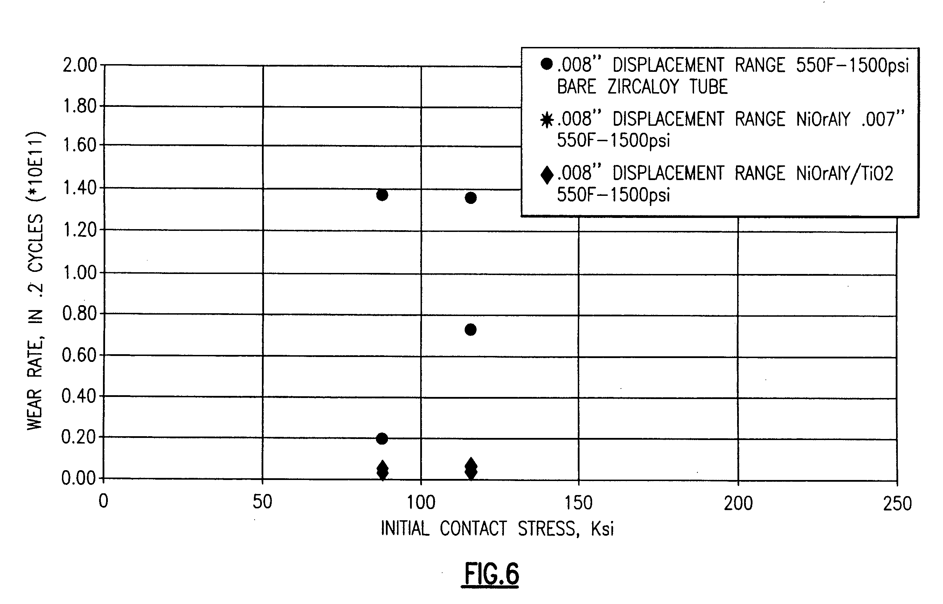

FIG. 6 is a graph of wear rate (in²/cycles) (1 in² = 645 mm²) versus initial contact stress (Ksi) (1 Ksi = 6.89 MPa) at a displacement range of about 0.203 mm (0.008 inches) at a temperature of about 288°C (550° F) and a pressure of about 10.34 MPa (1500 psi) for Zircaloy cladding tubes without the wear-inhibiting coating, Zircaloy cladding tubes with the wear-inhibiting coating comprising NiCrAlY that was deposited using the HVOF process, and Zircaloy cladding tubes with the wear-inhibiting coating comprising NiCrAlY and TiO₂ that was deposited using the HVOF and air plasma spray processes, respectively.

### DETAILED DESCRIPTION

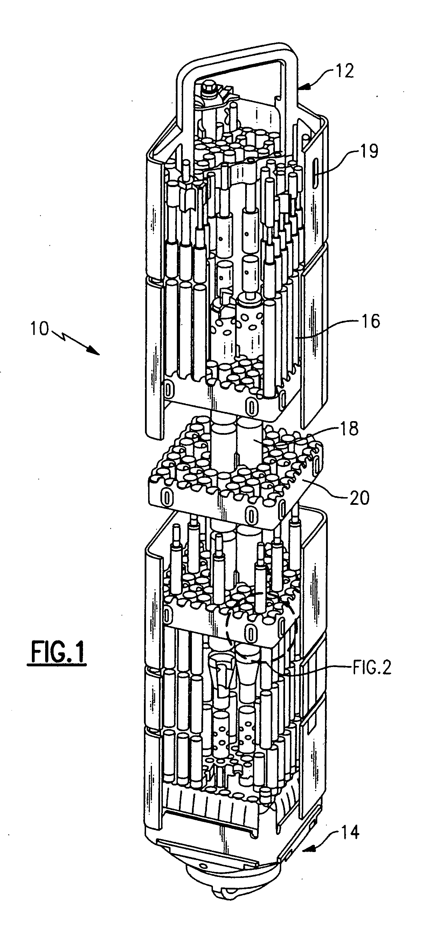

Referring to FIG. 1, a fuel bundle assembly is indicated generally by the reference numeral 10. Fuel assembly 10 includes an upper tie plate 12 and a lower tie plate 14, capturing at opposite ends a plurality of fuel rods 16 of the invention. In the case of BWR assemblies, the assembly 10 may contain one or more water rods 18. A plurality of spacer grids 20 are disposed along the length of the fuel rods 16 at locations between tie plates 12 and 14. In the case of BWR assemblies, the assembly 10 may contain a channel structure 19 enclosing the fuel rods 16 and spacer grids 20.

Coolant supplied from below the lower tie plate 14 may carry debris of the type noted above. As the coolant (water) flows upwardly, some debris will be intercepted and may drop down below the lower tie plate 14. Some debris, however, can impact upon the exterior surface of the fuel rods 16, the spacer grids 20 and, in the case of BWR assemblies, enclosing channel structure 22, particularly at the lower ends thereof. In the case where a fuel assembly does not include a debris-catching device or screen, an even greater amount of debris may be expected to impact upon the exterior surface of the fuel rods 16, the spacer grids 20 and other components in the fuel assembly 10. The debris particles are often hardened by irradiation and are known to rapidly fret the exterior of the fuel rods 16 as the water flows in the direction indicated by the arrow.

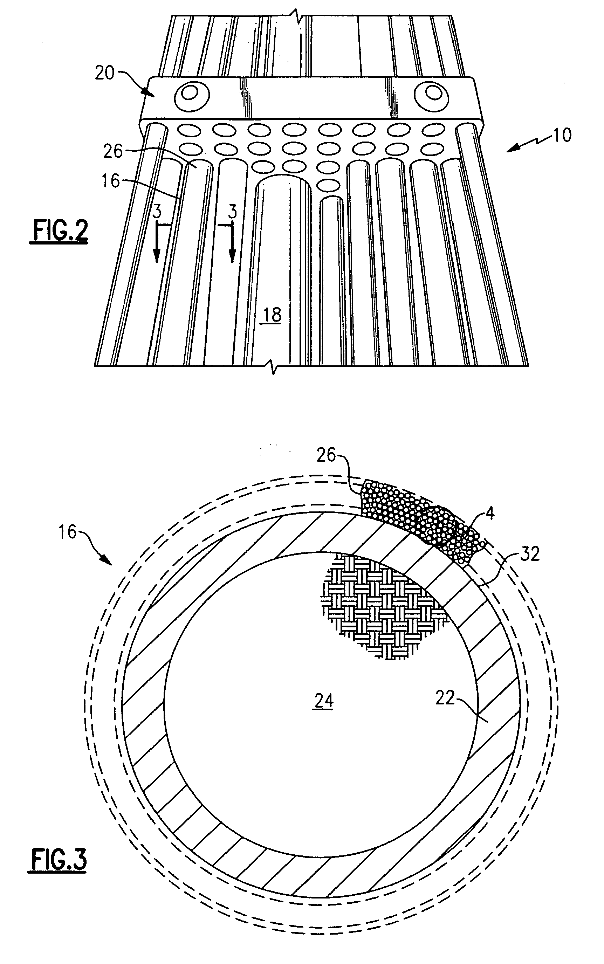

Referring now to FIGS. 2 and 3, the fuel rod 16 includes a zirconium-alloy cladding tube or cladding tube 22 that contain fuel pellets 24 of fissionable material, such as for example, UO2 and the like. The cladding tube 22 is commonly made of zirconiumtin alloy, such as Zircaloy-2, Zircaloy-4, and the like.

In accordance with an embodiment, a wear-inhibiting coating 26 is applied to an exterior surface 32 of the cladding tube 22 in one or more areas or zones where fretting is expected to occur. One expected area of fretting is in the vicinity of the spacer grid or spacer 20. The relative dimension of the coating 26 is exaggerated in FIG. 3 for description purposes.

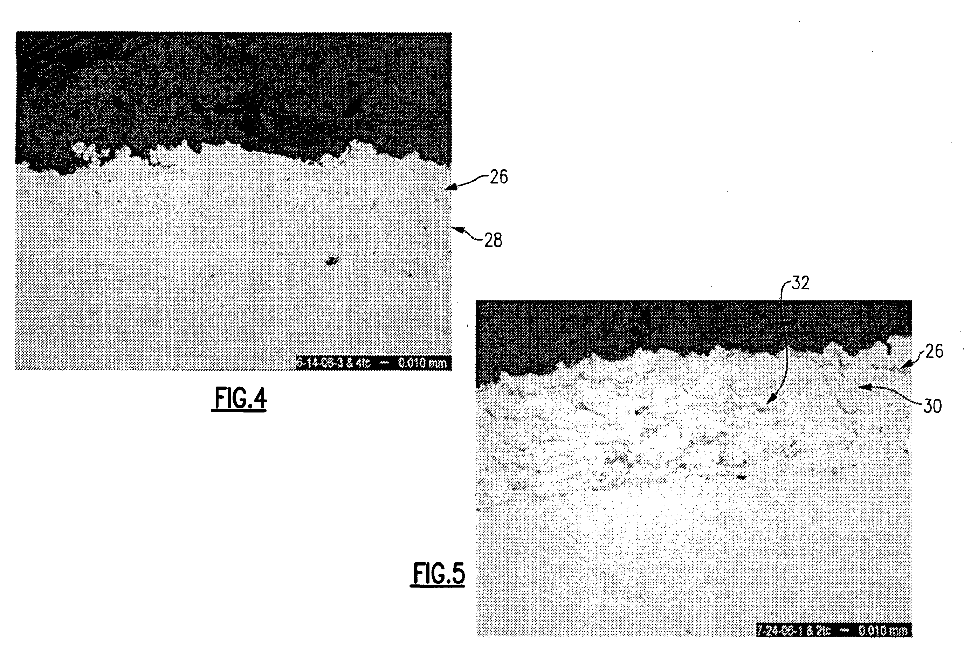

Referring now to FIGS. 4 and 5, photomicrographs of the various embodiments of the wear-inhibiting coating 26 are shown. In the illustrated embodiment shown in FIG. 4, the coating 26 comprises a hard metallic material 28, such as NiCrAlY, NiCr, FeCrAlY, FeCr, or combinations thereof, and the like having a thickness of between about 25 µm (microns) and about 175 µm (microns).

In an alternate embodiment of the wear-inhibiting coating 26 shown in FIG. 5, the coating 26 comprises a combination of both metal matrix material and ceramic and/or metal oxide. For example, the metal and ceramic material composite may comprise a metal matrix 30 (light phase in the photomicrograph) and a ceramic material or metal oxide hard phase material 32 (dark phase in the photomicrograph). The metal matrix 30 provides, among other things, corrosion resistance, toughness and adhesion properties, while the ceramic material or the metal oxide hard phase material 32 provides, among other things, additional hardness and wear resistance to the composite coating 26. In the illustrated embodiment of the composite coating 26 shown in FIG. 5, the metal coating or metal matrix 30 comprises NiCrAlY, NiCr, FeCrAlY, FeCr, and the like, and the ceramic material or the metal oxide hard phase material 32 comprises ZrO₂ Al₂O₃, Cr₂O₃, TiO₂, Cr₃C₂, combinations thereof, and the like. In the illustrated embodiment, the coating 26 has a thickness of between about 25 µm (microns) and about 175 µm (microns).

In general, the wear-inhibiting coating 26 can be applied to the cladding tube using many different types of thermal spray processes, depending on the materials applied to the cladding tube.

For example, in the case where the coating comprises a single hard metallic layer shown in FIG. 4, the hard metallic material can be applied using a thermal spray gun and parameters specific for creating the single hard metallic layer. Specifically, in the embodiment of the coating 26 with the single hard metallic material 28 shown in FIG. 4, the metallic material can be applied using a thermal spray process, such as Hyper-Velocity-Oxy-Fuel) (HVOF), Hyper-Velocity-Air-Fuel (HVAF), combinations thereof, and the like having a sufficient temperature and kinetic energy to cause the metal particles to adhere to the cladding and to each other to form a coating. For example, the temperature used in the HVOF process was about 3000 K and an average particle velocity of about 450 m/s for metal particles of an average size of about 5 µm (microns) to about 35 µm (microns).

In the HVOF (High Velocity Oxygen Fuel) Thermal Spray Process there are a number of HVOF guns that use different methods to achieve high velocity spraying. One method is basically a high pressure water cooled HVOF combustion chamber and long nozzle. Fuel (kerosene, acetylene, propylene and hydrogen) and oxygen are fed into the chamber. Combustion produces a hot high pressure flame which is forced down a nozzle increasing its velocity. Powder may be fed axially into the HVOF combustion chamber under high pressure or fed through the side of laval type nozzle where the pressure is lower. Another method uses a simpler system of a high pressure combustion nozzle and air cap. Fuel gas (propane, propylene or hydrogen) and oxygen are supplied at high pressure, combustion occurs outside the nozzle but within an air cap supplied with compressed air. The compressed air pinches and accelerates the flame and acts as a coolant for the HVOF gun. Powder is fed at high pressure axially from the centre of the nozzle.

In the alternate embodiment of the wear-inhibiting coating 26 shown in FIG. 5, there are different thermal spray processes or techniques that could be considered for creating the desired cermet coating 26. One technique for creating the composite cermet coating 26 shown in FIG. 5 that is harder and more wear-inhibiting then the single layer metal coating 26 shown in FIG. 4 is to inject a powder that includes both the metal and ceramic and/or metal oxide materials into the same thermal spray process that has been optimized for this specific powder. Another technique for creating the composite coating 26 shown in FIG. 5 would be to simultaneously inject the metallic powder material using a thermal spray process that has been optimized for the metallic powder material, and a different thermal spray process that has been optimized for the ceramic and/or oxide powder materials.

For example, the composite coating 26 can be created by simultaneously using a separate thermal spray process for the metal powder material and a different type of thermal spray process for the ceramic powder material and/or metal oxide hard phase powder material. The two different processes would be aimed at the same location on the cladding surface so that the melted metal and the ceramic or oxide metal would mix when impacting the cladding surface. In this way, each thermal spray process can be optimized for the metal powder material, ceramic powder material and/or metal oxide hard phase powder material to create the desired coating structure, such as the type of coating structure shown in FIG. 5.

Thermal spray processes that can be used to apply the metal powder material are HVOF, HVAF, and the like, that would minimize oxidation of the particles while in the hot flame, but have enough energy to splat out on to the surface of the cladding to form a dense coating. Thermal spray processes, such as air plasma spray, and the like, with higher temperatures are needed to be used to melt the metal oxides. If cermet powder is used with carbides, it is preferred not to melt or over heat the carbides.

Over heating the carbides would cause an undesirable decomposition of the carbides. Therefore, a HVOF process, a HVAF process, and the like, is preferred to minimize decomposition of the carbides and oxidation of the metal material within the cermet powder while they are entrained in the hot flame.

The plasma spray process used for the metal oxide hard phase powder material is basically the spraying of molten or heat softened material onto a surface to provide a coating. Material in the form of powder is injected into a very high temperature plasma flame, where it is rapidly heated and accelerated to a high velocity. For example, the flame temperature of a plasma torch may be about 15000 K. The hot material impacts on the substrate surface and rapidly cools forming a coating. This plasma spray process carried out correctly can be called a "cold process" (relative to the substrate material being coated) as the substrate temperature can be kept low during processing avoiding damage, metallurgical changes and distortion to the substrate material.

The plasma spray gun comprises a copper anode and tungsten cathode, both of which are water cooled, plasma gases (argon, nitrogen, hydrogen, helium) flows around the cathode and through the anode which is shaped as a constricting nozzle. The plasma is initiated by a high voltage discharge which causes localized ionization and a conductive path for a DC arc to form between cathode and anode. The resistance heating from the arc can cause the gas to reach an extreme temperature, dissociate, and ionize to form plasma. The plasma exits the anode nozzle as a free or neutral plasma flame (plasma which does not carry electric current) which is quite different to the Plasma Transferred Arc coating process where the arc extends to the surface to be coated. When the plasma is stabilized ready for spraying the electric arc extends down the nozzle, instead of shorting out to the nearest edge of the anode nozzle. This stretching of the arc is due to a thermal pinch effect. Cold gas around the surface of the water cooled anode nozzle being electrically non-conductive constricts the plasma arc, raising its temperature and velocity. Powder is fed into the plasma flame most commonly via an external powder port mounted near the anode nozzle exit. The powder is so rapidly heated and accelerated that spray distances can be in the order of about 25 mm to about 150 mm (about 0.984 inches to about 5.906 inches).

As shown in FIG. 5, by simultaneously applying the metal powder material, the ceramic powder material and/or the metal oxide hard phase material to the exterior of the cladding tube 22, the wear-inhibiting coating 26 that is formed on the exterior of the cladding tube 22 is primarily a cermet composition with a sufficient amount of metal matrix 30 to bond the ceramic material or metal oxide hard phase material 32 to the cladding tube 22. In one embodiment, the thickness of the composite coating 26 is preferably less than about 0.127 mm (about 0.005 inches), and more preferably between about 0.025 mm and about 0.125 mm (about 0.00098 inches and about 0.00492 inches). It has been found that a relatively thick coating could potentially impede the coolant water flow around the cladding tubes. In addition, thicker coatings might undesirably function as a thermal barrier.

Alternatively, the metal powder material, a ceramic powder material and/or metal oxide hard phase powder material can be premixed in a ratio so that there will be sufficient metal matrix 30 to bind the melted ceramic material or metal oxide hard phase material 32 to the cladding tube 22. The size and percent of the ceramic powder material or metal oxide hard phase powder material that would be added to the composite coating 26 is a function of the expected size of the debris causing the fretting and the trade offs between fretting wear resistance and impact resistance. Adding too much ceramic powder material or metal oxide hard phase powder material for a specific application may cause the composite coating 26 to fail from dynamic impact and not from fretting wear.

### EXAMPLE 1

In one form of the wear-inhibiting coating 26 similar to the type shown in FIG. 4, a metallic powder material comprising NiCrAlY was applied onto the exterior surface of a new Zircaloy cladding tube at a rate of between about 600 mm/sec and about 1200 mm/sec using a Hyper-Velocity-Oxy-Fuel (HVOF) thermal spray process so as to form an outer coating of about 0.178 mm (about 0.007 inches) in thickness.

### EXAMPLE 2

In another form of the wear-inhibiting coating 26 similar to the type shown in FIG. 5, a metallic powder material comprising NiCrAlY was applied onto the exterior surface of a new Zircaloy cladding tube, similar to Example 1. The coating was applied using a Hyper-Velocity-Oxy-Fuel) (HVOF) thermal spray process at a rotational speed of about 2120 rpm that resulted in a coating surface speed of about 1100 mm/sec with a linear index speed of about 6 mm/rotation. In addition, a ceramic powder material comprising TiO₂ was simultaneously applied onto the exterior surface of the cladding tube using a plasma spray process at a rotational speed of about 2120 rpm that resulted in a coating surface speed of about 1100 mm/sec with a linear index speed of about 6 mm/rotation so as to form an outer coating of about 0.178 mm (about 0.007 inches) in thickness.

The cladding tubes with the NiCrAlY coating and the NiCrAlY/TiO₂ coating were placed in a test rig that simulated the water temperature, water pressure, water chemistry, debris hardness and debris pressure commonly found during operation of the nuclear reactor.

Table I shows data from a rig wear test that was conducted on a new Zircaloy tube without the wear-inhibiting coating, a new Zircaloy tube with the wear-inhibiting coating comprising NiCrAlY that was deposited using the HVOF process, and a new Zircaloy tube with the wear-inhibiting coating comprising NiCrAlY/TiO₂ that was deposited using the HVOF and air plasma spray processes, respectively.

**Table 1. Data From Rig Wear Test**

| Sample | Condition | Total Profile wom area (in²) | Max Depth in. | Max Width in in. | Contact Stress Ksi | Comments | Environment | Cycles | Wear rate in2/cycles (*10E-11) | Wear rate in2/cycle |
|---|---|---|---|---|---|---|---|---|---|---|
| ZR4-2 4oz .06R | 4oz .06R-008 | 6.34E-04 | 1.16E-02 | 7.74E-02 | 116 | New Zr tube | 550F / 1500psi | 7.00E+06 | 9.05E+00 | 9.05E-11 |
| ZR4-3 4oz .06R | 4oz .06R-008 | 8.12E-04 | 1.41E-02 | 8.21E-02 | 116 | New Zr tube | 550F / 1500psi | 7.00E+06 | 1.16E+01 | 1.16E-10 |
| | | | | | | | | | | |
| ZR5-1 4oz .06R | 4oz .06R-008 | 9.50E-05 | 2.93E-03 | 5.48E-02 | 116 | NCrAlY .007" | 550F / 1500psi | 7.00E+06 | 1.36E+00 | 1,36E-11 |
| ZR5-2 4oz .10R | 4oz .10R-008 | 1.37E-05 | 7.10E-04 | 3.87E-02 | 88 | NiCrAlY 007" | 550F / 1500ps | 7.00E+06 | 1.96E-01 | 1.96E-12 |
| ZR5-3 4oz .06R | 4oz .06R-008 | 5.06E-05 | 1.54E-03 | 4.98E-02 | 116 | NiCrAlY .007" | 550F / 1500psi | 7.00E+06 | 7.23E-01 | 7.23E-12 |
| ZR5-4 4oz .10R | 4oz .10R-008 | 9.62E-05 | 1.97E-03 | 6.88E-02 | 88 | NiCrAlY .007" | 550F / 1500ps | 7.00E+06 | 1.37E+00 | 1.37E-11 |
| | | | | | | | | | | |
| ZR6-1 4oz .0R | 4oz .10R-008 | 8.07E-04 | 1.15E-02 | 1.02E-01 | 88 | New Zr tube | 550F / 1500psi | 7.00E+06 | 1.15E+01 | 1.15E-10 |
| ZR6-2 4oz .10R | 4oz .10R-008 | 7.52E-04 | 1.08E-02 | 9.20E-03 | 88 | New Zr tube | 550F / 1500psi | 7.00E+06 | 1.07E+01 | 1.07E-10 |
| ZR6-3 4oz .06R | 4oz .06R-008 | 8.61E-04 | 1.37E-02 | 8.73E-02 | 116 | New Zr tube | 550F / 1500psi | 7.00E+06 | 1.23E+01 | 1.23E-10 |
| ZR6-4 4oz .06R | 4oz .O6R-008 | 7.34E-04 | 1.23E-02 | 8.25E-02 | 116 | New Zr tube | 550F / 1500psi | 7.00E+06 | 1.05E+01 | 1.05E-10 |
| | | | | | | | | | | |
| ZR8-1 4oz .10R | 4oz .10R-008 | 7.80E-06 | 6.02E-04 | 2.48E-03 | 88 | NiCrAlY/TiO₂ | 550F / 1500psi | 2.60E+07 | 3.00E-02 | 3.00E-13 |
| ZR8-2 4oz .10R | 4oz .10R-008 | 1.22E-05 | 7.07E-04 | 3.17E-03 | 88 | NiCrAlY/TiO₂ | 550F / 1500psi | 2.60E+07 | 4.69E-02 | 4.69E-13 3 |
| ZR8-3 4oz .06R | 4oz .06R-008 | 1.60E-05 | 8.76E-04 | 3.00E-03 | 116 | NiCrAlY/TiO₂ | 550F / 1500psi | 2.60E+07 | 6.15E-02 | 6.15E-13 |
| ZR8-4 4oz .06R | 4oz .06R-008 | 1.02E-05 | 6.35E-04 | 2.55E-03 | 116 | NiCrAlY/TiO₂ | 550F / 1500psi | 2.60E+07 | 3.92E-02 | 3.92E-13 |

| | | | | | | | | | | |
|---|---|---|---|---|---|---|---|---|---|---|
| New Zr tube; a Zircaloy tube normally used as a fuel rod cladding. This is the material that wears through from debri fretting wear. NiCrAlY; A coating deposited onto the Zircaloy tube that is - 0.178 mm (-0.007") thick by an HVOF thermal spray process. NiCrAlY/TiO₂; A coating applied to the Zircaloy tube that is applied using both HVOF and Plasma spray simotaiously in a way to create a coating that is; dense, has a % of TiO₂ to significantly enhance fretting wear, a % of TiO₂ that will enable a bette | | | | | | | | | | |

FIG. 6 is a graph of wear rate (in²/cycles) (1 in² = 645 mm²) versus initial contact stress (Ksi) (1 Ksi = 6.89 MPa) at a displacement range of about 0.203 mm (0.008 inches) at a temperature of about 288°C (550° F) and a pressure of about 10.34 MPa (1500 psi) for Zircaloy cladding tubes without the wear-inhibiting coating, Zircaloy cladding tubes with the wear-inhibiting coating comprising NiCrAlY that was deposited using the HVOF process, and Zircaloy cladding tubes with the wear-inhibiting coating comprising NiCrAlY and TiO₂ that was deposited using the HVOF and air plasma spray processes, respectively.

As shown in Table I and FIG. 6, the cladding tubes with the NiCrAlY coating and the NiCrAlY/TiO₂ coating provided superior fretting wear characteristics as compared to the Zircaloy cladding tube with no coating. In addition, the cladding tubes with the NiCrAlY/TiO2 coating provide superior fretting wear characteristics as compared to the Zircaloy cladding tube with the NiCrAlY coating.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A nuclear fuel rod (16), comprising:
a cladding tube (22); and
a hard metallic material (28) bonded to an outer surface of the cladding tube (22), wherein the hard metallic material (28) is selected from the group consisting of NiCrAlY, NiCr, FeCrAlY, FeCr, or combinations thereof.

2. The fuel rod according to claim 1, wherein the hard metallic material (28) has a thickness between about 25µm (microns) and about 175µm (microns).

3. A fuel rod according to claim 1 wherein the hard metallic material is a metal matrix (30) which acts as a binding agent for bonding a ceramic material or a metal oxide hard phase material (32) to the cladding tube (16).

4. The fuel rod according to claim 3, wherein the ceramic material or metal oxide hard phase material (32) is selected from the group consisting of ZrO₂, Al₂O₃, Cr₂O₃, TiO₂, Cr₃C₂, or combinations thereof.

5. A method for enhancing the fretting wear characteristics of a nuclear fuel rod comprising the step of thermal spraying a hard metallic powder material (28) selected from the group consisting of NiCrAlY. NiCr, FeCrAlY, FeCr, or combinations thereof, onto an outside surface of a cladding tube (22) to form a wear-inhibiting coating (26).

6. The method according to claim 5, wherein the hard metallic powder material (28) is applied using a Hyper-Velocity-Oxy-Fuel) (HVOF) thermal spray process, a Hyper-Velocity-Air-Fuel (HVAF) thermal spray process, or a combination thereof.

7. The method according to claim 5 or claim 6, wherein the hard metallic powder material (28) has an average particle size between about 5µm (microns) and about 35µm (microns).

8. The method according to any one of claims 5, 6 or 7, further comprising the step of plasma spraying a ceramic powder material simultaneously with the hard metallic powder material (30) onto the outside surface of the cladding tube, whereby the hard metallic powder material (30) acts as a binding agent to bond the ceramic powder material (32) onto the outside surface of the cladding tube (22).

9. The method according to claim 8, wherein the ceramic powder material (32) has an average particle size between about 5µm (microns) and about 50µm (microns).

10. The method according to claim 5, further comprising the step of high temperature thermal spraying a metal oxide hard phase powder material (32) simultaneously with the hard metallic powder material (30) onto the outside surface of the cladding tube, whereby the hard metallic powder material (30) acts as a binding agent to bond the metal oxide hard phase powder material (32) onto the outside surface of the cladding tube (22).

11. The method according to claim 10, wherein the metal oxide hard phase powder material (32) has an average particle size between about 2µm (microns) and about 15µm (microns).

## Patentansprüche

1. Kernbrennstab (16), aufweisend:
ein Hüllrohr (22); und
ein hartes metallisches Material (28), das mit einer Außenoberfläche des Hüllrohres (22) verbunden ist, wobei das harte metallische Material (28) aus der aus NiCrAlY, NiCr, FeCrAlY, FeCr oder Kombinationen davon bestehenden Gruppe ausgewählt ist.

2. Brennstab nach Anspruch 1, wobei das harte metallische Material (28) eine Dicke zwischen ca. 25 µm und ca. 175 µm hat.

3. Brennstab nach Anspruch 1, wobei das harte metallische Material eine Metallmatrix (30) ist, welche als ein Bindemittel zum Verbinden eines keramischen Materials oder eines Metalloxid-Hartphasenmaterials (32) mit dem Hüllrohr (16) wirkt.

4. Brennstab nach Anspruch 3, wobei das keramische Material oder Metalloxid-Hartphasenmaterial (32) aus der aus ZrO₂, Al₂O₃, Cr₂O₃, TiO₂, Cr₃C₂ oder Kombinationen davon bestehenden Gruppe ausgewählt ist.

5. Verfahren zum Verbessern der Abriebverschleißeigenschaft eines Kernbrennstabes mit dem Schritt des thermischen Aufspritzens eines harten metallischen Pulvermaterials (28), das aus der aus NiCrAlY, NiCr, FeCrAlY, FeCr oder Kombinationen davon bestehenden Gruppe ausgewählt ist, auf eine Außenoberfläche des Hüllrohres (22), um eine verschleißverhindernde Beschichtung (26) auszubilden.

6. Verfahren nach Anspruch 5, wobei das harte metallische Pulvermaterial (28) unter Anwendung eines Hyper-Velocity-Oxy-Fuel - (HVOF) - Wärmeaufspritzprozesses, eines Hyper-Velocity-Air-Fuel - (HVAF) - Wärmeaufspritzprozesses oder einer Kombination davon aufgebracht wird.

7. Verfahren nach Anspruch 5 oder Anspruch 6, wobei das harte metallische Pulvermaterial (28) eine durchschnittliche Partikelgröße zwischen ca. 5 µm und ca. 35 µm hat.

8. Verfahren nach einem der Ansprüche 5, 6 oder 7, ferner mit dem Schritt des Plasmaaufspritzens eines keramischen Pulvermaterials gleichzeitig mit dem harten metallischen Pulvermaterial (30) auf eine Außenoberfläche des Hüllrohres, wodurch das harte metallische Pulvermaterial (30) als ein Bindemittel zum Binden des keramischen Pulvermaterials (32) auf die Außenseitenoberfläche des Hüllrohres (22) dient.

9. Verfahren nach Anspruch 8, wobei das keramische Pulvermaterial (32) eine durchschnittliche Partikelgröße zwischen ca. 5 µm und ca. 50 µm hat.

10. Verfahren nach Anspruch 5, ferner mit dem Schritt des Hochtemperaturaufspritzens eines Metalloxid-Hartphasen-Pulvermaterials (32) gleichzeitig mit dem harten metallischen Pulvermaterial (30) auf eine Außenoberfläche des Hüllrohres, wodurch das harte metallische Pulvermaterial (30) als ein Bindemittel zum Binden des Metalloxid-Hartphasen-Pulvermaterials (32) auf die Außenseitenoberfläche des Hüllrohres (22) dient.

11. Verfahren nach Anspruch 10, wobei das Metalloxid-Hartphasen-Pulvermaterials (32) eine durchschnittliche Partikelgröße zwischen ca. 2 µm und ca. 15 µm hat.

## Revendications

1. Barre de combustible nucléaire (16), comprenant:
un tube de revêtement (22) ;
et un matériau métallique dur (28), attaché à une surface externe du tube de revêtement (22) ;
dans laquelle le matériau métallique dur (28) est choisi dans l'ensemble formé par les matériaux de formules NiCrAlY, NiCr, FeCrAlY et FeCr et leurs combinaisons.

2. Barre de combustible conforme à la revendication 1, dans laquelle l'épaisseur du matériau métallique dur (28) est comprise entre environ 25 µm (micromètres) et environ 175 µm (micromètres).

3. Barre de combustible conforme à la revendication 1, dans laquelle le matériau métallique dur forme une matrice métallique (30) qui joue le rôle d'un agent de liaison qui attache au tube de revêtement (22) un matériau céramique ou un matériau à phase dure en oxyde de métal (32).

4. Barre de combustible conforme à la revendication 3, dans laquelle le matériau céramique ou matériau à phase dure en oxyde de métal (32) est choisi dans l'ensemble formé par les matériaux de formules ZrO₂, Al₂O₃, Cr₂O₃, TiO₂ et Cr₃C₂ et leurs combinaisons.

5. Procédé permettant d'améliorer les caractéristiques d'usure par corrosion d'une barre de combustible nucléaire, lequel procédé comporte une étape de projection thermique d'un matériau métallique dur (28) à l'état de poudre, choisi dans l'ensemble formé par les matériaux de formules NiCrAlY, NiCr, FeCrAlY et FeCr et leurs combinaisons, sur une surface externe d'un tube de revêtement (22), pour former un revêtement (26) inhibiteur d'usure.

6. Procédé conforme à la revendication 5, dans lequel on applique le matériau métallique dur pulvérulent (28) selon un procédé de projection thermique par flamme hypersonique HVOF ou HVAF, ou une combinaison de ces procédés.

7. Procédé conforme à la revendication 5 ou 6, dans lequel le matériau métallique dur pulvérulent (28) présente une taille moyenne de particules qui est comprise entre environ 5 µm (micromètres) et environ 35 µm (micromètres).

8. Procédé conforme à l'une des revendications 5, 6 et 7, qui comporte en outre le fait de projeter par plasma un matériau céramique à l'état de poudre, en même temps que le matériau métallique dur pulvérulent (30), sur la surface externe du tube de revêtement, ce qui fait que le matériau métallique dur pulvérulent (30) joue le rôle d'un agent de liaison qui attache à la surface externe du tube de revêtement (22) le matériau céramique pulvérulent (32).

9. Procédé conforme à la revendication 8, dans lequel le matériau céramique pulvérulent (32) présente une taille moyenne de particules qui est comprise entre environ 5 µm (micromètres) et environ 50 µm (micromètres).

10. Procédé conforme à la revendication 5, qui comporte en outre le fait de projeter par projection thermique à haute température un matériau à phase dure en oxyde de métal (32) à l'état de poudre, en même temps que le matériau métallique dur pulvérulent (30), sur la surface externe du tube de revêtement, ce qui fait que le matériau métallique dur pulvérulent (30) joue le rôle d'un agent de liaison qui attache à la surface externe du tube de revêtement (22) le matériau pulvérulent à phase dure en oxyde de métal (32).

11. Procédé conforme à la revendication 10, dans lequel le matériau pulvérulent à phase dure en oxyde de métal (32) présente une taille moyenne de particules qui est comprise entre environ 2 µm (micromètres) et environ 15 µm (micromètres).
